# EUROPÄISCHE PATENTSCHRIFT

(11) **EP 3 762 166 B1**
(45) Veröffentlichungstag und Bekanntmachung des Hinweises auf die Patenterteilung: **15.09.2021**
(21) Anmeldenummer: 19724740.6
(22) Anmeldetag: 25.04.2019
(51) Int. Cl.: B22F 10/80, B33Y 10/00, B33Y 40/20, B33Y 50/00

(54) **VERFAHREN ZUR ENTWICKLUNG VON SCHMIEDEWERKSTOFFEN**
METHOD FOR DEVELOPING FORGING MATERIALS
PROCÉDÉ DE DÉVELOPPEMENT DE MATÉRIAUX DE FORGE

(30) Priorität: 30.05.2018 DE 102018004337
(43) Veröffentlichungstag der Anmeldung: 13.01.2021
(73) Patentinhaber: Rosswag GmbH, 76327 Pfinztal (DE)
(72) Erfinder: DONISI, Sven, 76327 Pfinztal (DE); ESSIG, Alexander, 76327 Pfinztal (DE); GRAF, Gregor, 76327 Pfinztal (DE); BAMBACH, Markus, 03044 Cottbus (DE)
(74) Vertreter: Mehl-Mikus, Claudia
(86) Internationale Anmeldenummer: PCT/EP2019/000129
(87) Internationale Veröffentlichungsnummer: WO 2019/228663

(56) Entgegenhaltungen:
- WO-A1-2017/129294
- DE-A1-102015 115 963
- DE-A1-102015 210 192
- US-A1- 2016 175 929
- US-A1- 2016 288 266
- US-A1- 2017 320 277

## Beschreibung

Schmieden ist eines der ältesten Fertigungsverfahren zur Formgebung metallischer Werkstoffe mit jahrtausendealter Tradition. Im Zuge der industriellen Revolutionen hat sich das Schmieden von einer Handwerkskunst zu einem modernen Fertigungsverfahren entwickelt. Viele Produkte, bei denen es auf hohe Sicherheit, Zuverlässigkeit und Lebensdauer ankommt, werden durch Schmiedeverfahren hergestellt. Laut Angaben des Branchenverbands EUROFORGE lag das Produktionsvolumen der Unternehmen der deutschen Massivumformindustrie im Jahr 2016 bei ca. 2,8 Mio. Tonnen. Geschmiedete Hochleistungskomponenten bilden die Grundlage technischer Innovationen in den Bereichen Energie- und Verkehrstechnik. Um im Zeitalter der Globalisierung an deutschen Standorten kosteneffizient und mit reproduzierbar hoher Qualität zu fertigen, muss durch Werkstoffinnovationen ein Wissensvorsprung zu Niedriglohnländern gehalten werden.

Die industrielle Entwicklung neuer Schmiedewerkstoffe ist ein zeitaufwändiger, iterativer Prozess. Zwar wird heute bereits versucht, mit thermodynamischen und kinetischen Simulationen die Eigenschaften neuer Werkstoffe am Computer vorherzusagen, jedoch muss in jedem Falle eine experimentelle Werkstoffherstellung und Charakterisierung erfolgen.

Für die Herstellung von Halbzeugen (erste Verarbeitungsstufe) werden im Zuge der Entwicklung eines neuen Werkstoffs üblicherweise im Blockgießverfahren industriell Blöcke von mehreren hundert Kilogramm bis zu einigen Tonnen Einsatzgewicht gegossen. Hierbei treten insbesondere bei hochlegierten Werkstoffen (u. a. Stähle, Nickelbasislegierungen) ausgeprägte Makroseigerungen, d. h., örtliche Variationen der chemischen Zusammensetzung, auf. Die Blöcke müssen durch Glühbehandlungen oder ggf. sogar Elektroschlackeumschmelzen (ESU) homogenisiert werden. Makroseigerungen entlang der vertikalen Achse des Blocks bleiben jedoch auch nach dem ESU-Prozess erhalten. Diese Seigerungsmuster setzten sich beim nachfolgenden Warmumformen bis hin zu den Werkstoffproben fort und führen zu inhomogenen Werkstoffeigenschaften.

Das Prozessfenster für einen Schmiedeprozess ist in diesem Stadium der Werkstoffentwicklung zumeist noch unbekannt. Bei schwer umformbaren Werkstoffen muss der Schmiedeprozess häufig experimentell optimiert werden, wobei insbesondere das Temperatur- und Geschwindigkeitsfenster für die schädigungsfreie Umformung ermittelt werden muss. Da kleine Werkstoffproben schnell auskühlen, erfolgt das Umschmieden an vergleichsweise großen Blöcken, die in der Forschung aus mindestens 80 kg Stahl, meist mehr, gefertigt werden.

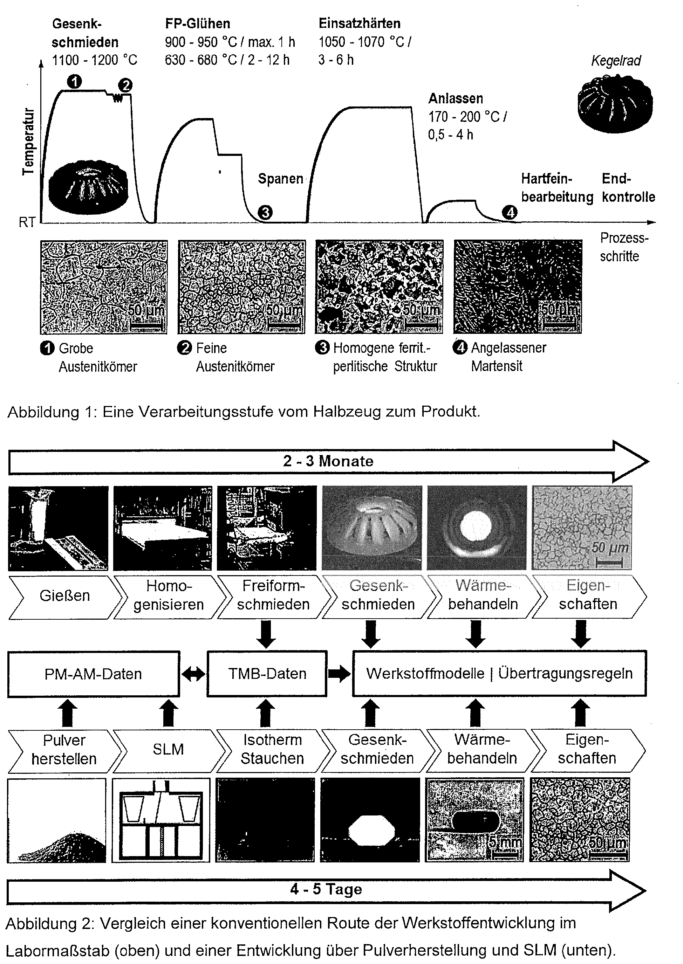

Aus erfolgreich umgeschmiedeten Blöcken können dann Proben für die anschließende Herstellung von Schmiedeteilen und die Wärmebehandlung entnommen werden (zweite Verarbeitungsstufe; Abbildung 1). Schließlich können an den wärmebehandelten Proben die für die spätere Anwendung relevanten mechanischen Eigenschaften (u. a. Streckgrenze, Zugfestigkeit, Bruchdehnung, Kerbschlagbiegearbeit) ermittelt werden. Auf Basis der Ergebnisse erfolgen eine Anpassung des Werkstoffkonzepts und ein erneutes Durchlaufen der Prozesskette. Eine Iteration dauert hierbei im günstigsten Fall ca. 2 bis 3 Monate, die gesamte Werkstoffentwicklung ca. 2 bis 3 Jahre. Neben der langen Dauer ist die gesamte Entwicklung mit hohen Kosten und Materialaufwendungen verbunden.

US2017/320277 offenbart ein Verfahren zum schichtweisen Herstellen von metallischen Formteilen mittels Elektroschmelzen. Dazu wird ein Rohmaterial aufgeschmolzen und Schicht für Schicht mit einer Basis verbunden, um unter Einsparung zusätzlicher Prozessschritte ein in seinen mechanischen und chemischen Eigenschaften zuverlässiges Endprodukt zu erhalten. In US2017/320277 wird jedoch kein Schmiedewerkstoff entwickelt.

Ausgehend von diesem Stand der Technik ergibt sich die Aufgabe, das Verfahren der Schmiedewerkstoffentwicklung schneller und günstiger zu gestalten, als dies bis dato möglich ist.

Diese Aufgabe wird durch ein Verfahren mit den Merkmalen des Anspruchs 1 gelöst. Weiterbildungen des Verfahrens werden in den Unteransprüchen formuliert.

Gemäß einer ersten Ausführungsform des erfindungsgemäßen Verfahrens wird zur Entwicklung des Schmiedewerkstoffes und zur Überprüfung dessen physikalisch-chemischer und mechanischer Eigenschaften ein Werkstoffprüfstück gefertigt, und zwar nicht als Gussblock, sondern aus Metallpulver durch additive Fertigung.

Das Verfahren umfasst die Schritte:
a) Vorbestimmen einer Ziel-Zusammensetzung einer additiv zu fertigenden Werkstoffprobe eines Ziel-Schmiedewerkstoffes,
b) Bereitstellen eines Metallpulvers mit einer Ausgangszusammensetzung, die sich von der Ziel-Zusammensetzung um einen Kompensationsanteil zumindest eines Legierungsbestandteils unterscheidet, der durch einen Verlustanteil des zumindest einen Legierungsbestandteils beim additiven Fertigen vorbestimmt ist, zur additiven Fertigung der Werkstoffprobe mit der Ziel-Zusammensetzung aus a),
c) Erhalten eines ersten Gefügezustandes aus der additiven Fertigung,
d) durch thermomechanische Behandlung der additiv gefertigten Werkstoffprobe Generieren einer Mikrostruktur ausgehend vom Herstellen des Ausgangsmaterials für das Schmieden durch Gießen, die einer Mikrostruktur einer aus demselben Werkstoff geschmiedeten Werkstoffprobe entspricht, und
e) Ausführen von Untersuchungen über die Verarbeitungs- und Endeigenschaften der Werkstoffprobe, hieraus Rückschließen auf die Eignung der ersten chemischen Zusammensetzung als Ziel-Schmiedewerkstoff.

Unter Ziel-Schmiedewerkstoff (der eine Ziel-Zusammensetzung mit einem Ziel-Gefüge aufweist) wird hierin der Schmiedewerkstoff verstanden, mit dem letztendlich im konventionellen Herstellverfahren des Ausgangsmaterials für das Schmieden durch Gießen gearbeitet werden soll, und dessen Grundmaterial mit Hilfe des additiven Fertigens zur Vermeidung überflüssigen Probenmaterials und zwecks Zeitersparnis entwickelt wird.

Pulvermetallurgische additive Fertigungsverfahren der erfindungsgemäßen Art an sich umfassen generell das Bereitstellen als erstem Schritt von Metallpulver als Gemisch für die Schaffung einer Legierung. Die Herstellung des Pulvers erfolgt entweder mechanisch oder chemisch, wobei hierin die mechanische Herstellung im Fokus steht: Bei der mechanischen Pulverisierung wird das Ausgangsmaterial gemahlen oder eine metallische Schmelze verdüst. Bereits beim Verdüsen kann es dabei zu Verlusten von Legierungselementen kommen, so dass das im Ergebnis erhaltene Pulverprodukt nicht der Zusammensetzung seiner Edukte entspricht.

Das additive Verfahren an sich - als dessen Bestandteil hierin die Pulverschaffung verstanden wird - kann dabei schmelzend (bspw. Laser-Schmelzen (selective laser melting (SLM), laser beam melting (LBM), Elektronenstrahl-Schmelzen (electron beam melting (EBM) oder nicht-schmelzend (bspw. Laser-Sintern) verlaufen. Auch die additive Fertigung von Pulver-Binder-Gemischen mit anschließendem Sintern, das Verpressen und Sintern von Proben, das Metal-Injection Moulding, das formgebende Fügen durch Auftragsschweißen mit Plasma bzw. Lichtbogen und Pulver bzw. Fülldraht und das Thermische Spritzen seien beispielhaft separat genannt.

Vorteilhaft werden durch das erfindungsgemäße Verfahren Verluste an Legierungselementen, die unter anderem beim Schritt des Verdüsens (bedarfsgerechtes Herstellen des Metallpulver für das anschließende Verarbeiten in der additiven Fertigungsanlage) des Metallpulvers oder bei anderen Verfahrensschritten der additiven Fertigung auftreten, kompensiert, wodurch sicher gestellt wird, dass die additiv gefertigten Werkstoffproben die geforderte chemische Zusammensetzung aufweisen. Weiter wird vorteilhaft aus dem Gefügezustand, der nach der additiven Fertigung vorliegt, durch thermomechanische Behandlung eine Mikrostruktur generiert, die mit dem konventionell hergestellten Material übereinstimmt, so dass an diesem Zustand Untersuchungen über die Verarbeitungs- und Endeigenschaften gewonnen werden können. Durch thermomechanische Behandlung wird also eine gezielte Gefüge-Einstellung an additiv hergestelltem Material realisiert. Hierbei wird die Tatsache ausgenutzt, dass die additive Fertigung speziell durch selektives Laserschmelzen die Herstellung sehr feinkörniger, homogener Proben mit gleichmäßiger Elementverteilung ermöglicht. So genannte Seigerungen, d. h. inhomogene Elementverteilungen, wie sie bei der konventionellen Fertigung durch Gießen auftreten, können weitestgehend vermieden werden. Bei konventioneller Werkstoffentwicklung wird ein erheblicher Aufwand auf die Homogenisierung der Werkstoffe nach dem Gießen verwendet. Hierzu gehören lange Glühzeiten von mehreren Stunden und ggf. ein aufwändiges Umschmieden (3D Schmieden) zur Verringerung der Diffusionswege.

Vorteilhaft ermöglicht das erfindungsgemäße Verfahren, dass diese Schritte entfallen.

Erfindungsgemäß wird durch additive Fertigung im Gefüge gespeicherte Energie (durch Grenzflächen, Phasen und Eigenspannung) genutzt, um in einer vergleichsweise (in Bezug auf die Umformung von Gussprodukten) kurzen Glühbehandlung bzw. thermomechanischen Behandlung die gewünschten Gefügemerkmale wie u. a. Korngröße und Phasenanteile einzustellen.

Weiterer Vorteil des erfindungsgemäßen Verfahrens ist daher der Nebeneffekt der (vergleichsweise in Bezug auf konventionelle Verfahren) erhöhten Streckenenergie als möglicher Stellgröße im Entwicklungsprozess.

Wesentlicher Kern der Erfindung ist daher die gezielte Nutzung und Beeinflussung der Eigenschaften wie Homogenität, Feinkörnigkeit, hochenergetische Nichtgleichgewichtszustände oder Eigenspannungen additiv hergestellter Proben, um mit vergleichsweise geringem Aufwand das gewünschte Zielgefüge reproduzierbar herzustellen.

Weiter können, wenn die sich aus den Untersuchungen ergebenden Ergebnisse über die Verarbeitungs- und Endeigenschaften erwartungsgemäß sind, an kleinen Probenmengen gezielt Aussagen über das Prozessfenster für den Schmiedeprozess und die Wärmebehandlungsparameter ermittelt sowie Informationen über die finalen Eigenschaften des Werkstoffs gesammelt werden - man muss dann nicht derart große Schmiedeblöcke einsetzen, wie dies bei der konventionellen Entwicklung nötig ist und vermeidet aufwändige Nachbehandlungen (Homogenisieren, Umschmieden). Zudem können endkonturnahe Proben für die Werkstoffherstellung gedruckt werden, während die konventionelle Herstellung eine aufwändige mechanische Probenfertigung benötigt.

"Kleine" Proben meint dabei Proben mit Dimensionen von etwa 20 mm Durchmesser und etwa 30 mm Höhe. Diese Angabe ist nicht bindend sondern dient dazu, eine generelle Größenvorstellung zu schaffen. Abweichungen von 5 bis 10 mm bei Durchmesser und Höhe sind möglich; auch nicht-runde Werkstückproben mit vergleichbaren Dimensionen sind realisierbar.

"Kleine Probenmengen" meint, dass vorteilhaft beispielsweise etwa nur rund 50 solcher Proben benötigt werden, um das Schmiedeverhalten zu charakterisieren, weitere 10 bis 15 Stück können ausreichen, um das Umwandlungsverhalten und die finalen Eigenschaften zu bestimmen. Damit können mit einer Verdüsung von ca. 1 L Werkstoff die gleichen Aussagen gewonnen werden wie durch Herstellung eines Gussblockes aus mindestens 10 L Schmelze, üblicherweise jedoch eher deutlich mehr.

Vorteilhaft führt das erfindungsgemäße Verfahren zur Schmiedewerkstoffschaffung zur Verringerung von Material- und Energieeinsatz und somit zur eine Ressourcen- und Umweltschonung sowie zu drastisch verkürzten Entwicklungszeiten.

In einer weiteren Ausführungsform des Verfahrens werden in Verfahrensschritt f) Eigenschaften der additiv gefertigten Schmiedewerkstoffprobe auf das Verarbeiten dieses Schmiedewerkstoffes mittels konventionellem Gussverfahren übertragen.

Für Schritt f) können charakteristische Beschreibungsmerkmale wie Korngröße, Elementverteilungen, Ausscheidungszustände usw. genutzt werden.

In einem weiteren Verfahrensschritt g), der unabhängig von Schritt f) erfolgt, wird die Wirkung der Zugabe vorbestimmter Legierungselemente auf die Schmiedewerkstoffprobe nachgewiesen. So wird etwa die Wirkung vorbestimmter Legierungselemente auf die Umformbarkeit der Schmiedewerkstoffprobe oder auf die Beeinflussung des Umwandlungsverhaltens bei der Wärmebehandlung als Untersuchungsparameter herangezogen.

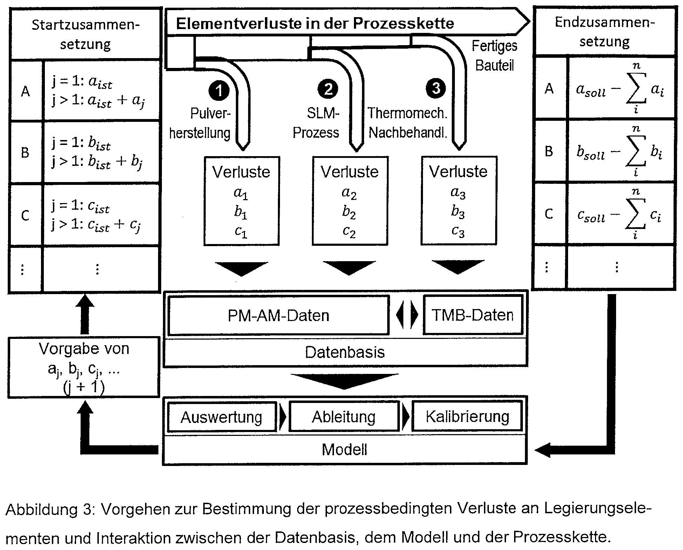

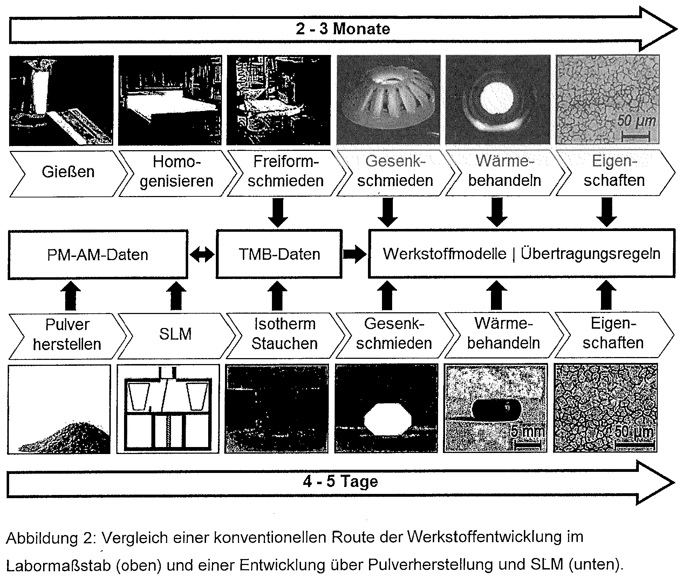

In einer noch weiteren Ausführungsform des Verfahrens wird eine Datenbank angelegt, in der die vorbestimmten Werkstoffe modelliert werden. Die Datenbank dient der Erstellung von Übertragungsregeln zur Übertragung der mit der additiven Fertigung der Schmiedewerkstoffprobe erzielten Kenntnisse auf die Fertigung mittels konventionellem Guss- und Schmiedeverfahren. (Abbildung 2 und Abbildung 3). In der Datenbank werden die Zusammenhänge zwischen Pulvereigenschaften, Prozessparametern der additiven Fertigung und der resultierenden Mikrostruktur gespeichert (Pulvermetallurgie-Additive Manufacturing Datenbank). Auf Basis experimenteller Untersuchungen über die thermomechanische Behandlung additiv gefertigter Werkstoffe werden zudem Daten über die Entwicklung der Mikrostruktur als Funktion der Parameter der thermomechanischen Behandlung (TMB) generiert (TMB-Datenbank). Hierbei werden sowohl die Warmumformung (Schmieden) und die Wärmebehandlung (z. B. Härten) an kleinen additiv gefertigten Proben untersucht. Am Beispiel: Es kann etwa ein Zylinder von 20 mm Durchmesser und 30 mm Höhe gefertigt werden, oder eine runde Zugprobe mit ca. 50 mm Messlänge.

Ein weiterer Verfahrensschritt h) sieht die Modellerstellung für die Schmiedewerkstoffpulverherstellung, den SLM-Prozess und das Umform- und Umwandlungsverhalten vor, die die gesamte Prozesskette Pulvermetallurgie - thermomechanische Behandlung abbilden. Die Modelle werden sowohl für die Beschreibung der additiv hergestellten Proben als auch für die konventionell hergestellten Proben herangezogen. Sie basieren auf physikalischen Annahmen und Größen wie Aktivierungsenergien für die Warmumformung und die auftretenden Phasenumwandlungen. Werden die Modelle sowohl an die additiv hergestellten Proben als auch an die Referenzproben angepasst, so bilden diese Modelle die wesentlichen Werkstoffmerkmale ab. Zwischen den Modellen werden Übertragungsregeln abgeleitet werden, die es erlauben, vom additiv hergestellten Zustand auf den konventionellen Zustand zu schließen. Für die Ableitung der Regeln werden Verfahren wie datenbasierte Modelle (Machine Learning), phänomenologische oder physikalische Zusammenhänge und ggf. thermodynamische Datenbanken genutzt.

Das erfindungsgemäße Verfahren ermöglicht damit auch bei Werkstoffen mit neuer bzw. modifizierter chemischer Zusammensetzung eine schnelle Identifikation der Verarbeitungsparameter, so dass an Werkstoffproben aus diesen Werkstoffen nach thermomechanischer Behandlung die für die jeweilige Anwendung relevanten Eigenschaften bestimmt werden können.

Die vorliegende Erfindung stellt damit Lösungen für die schnelle Entwicklung neuer Schmiedewerkstoffe bereit und erlaubt es, signifikante Zeit- und Kostenvorteile gegenüber heute eingesetzten Prozessrouten zu erzielen, wobei "Prozessroute" die gesamte Herstellungs- oder Prozesskette von der Schmelze eines Werkstoffes bis zur Werkstoffprobe, an der die gesuchten Werkstoffeigenschaften bestimmt werden können, meint.

Für die Herstellung des Werkstoffpulvers wird vorzugsweise ein Atomizer zur Gasverdüsung eingesetzt. Es ist allerdings auch möglich beispielsweise mittels Wasserverdüsung oder Plasmaverdüsung das benötigte Metallpulver als Ausgangswerkstoff herzustellen. Vorteilhaft können mit diesem mehrere Liter Schmelze, geeigneter Weise ein bis zehn Liter Schmelze verdüst werden. Es ist davon auszugehen, dass das Metallpulver von einem Legierungselementverlust bei der Verdüsung betroffen ist. Diese Verluste werden bestimmt und entsprechend in die Pulvermetallurgie-Additive Manufacturing-Datenbank eingepflegt. Das Metallpulver mit einer chemischen Zusammensetzung innerhalb vorgegebener Toleranzen wird anschließend zu homogenen Werkstoffproben mittels additiver Fertigung im Pulverbettverfahren verarbeitet, was zu sehr feinen, homogenen Mikrostrukturen führt, die von den Strukturen abweichen, die durch konventionell hergestellte Gussproben erzeugt werden.

Um daher ein Gefüge einzustellen, das der konventionellen Herstellroute (also der Fertigungsweise über Gussproben) entspricht, werden die Gefügemerkmale bestimmt und Eigenschaften thermomechanischer Behandlungsstrategien an kleinen Laborproben entwickelt, wie sie oben beispielhaft größenmäßig angegeben werden.

Dies erfolgt, indem zunächst an den konventionell hergestellten Werkstoffgüten die chemische Zusammensetzung und die für die Eigenschaften wesentlichen Gefügemerkmale wie Korngrößen, Phasenanteile und Homogenität bestimmt werden.

Dann werden zum Vergleich an den additiv aus Pulver hergestellten Werkstoffproben z. B. auf einem Umformdilatometer mit Hilfe statistischer Versuchsplanung unterschiedliche thermo-mechanische Behandlungen durchgeführt.

Anhand der Versuchsergebnisse werden Daten für die Datenbank aufbereitet und Modelle für die Mikrostrukturentwicklung und der chemischen Zusammensetzung abgeleitet und kalibriert. Des Weiteren werden mithilfe von Machine Learning Algorithmen Übertragungsregeln erstellt, mittels derer ein funktionaler Zusammenhang zwischen den Werkstoffmodellen der additiv hergestellten Proben (AP) und konventionellen Proben (KP) abgeleitet wird.

Aus der so erstellten Daten- und Modellbasis können für neue Werkstoffe schnell und Modell unterstützt geeignete Parameter für die gesamte Prozesskette PM-SLM-TMB identifiziert und vorbestimmt werden, sodass mit im Vergleich zum Stand der Technik verringertem Zeit- und Materialaufwand Werkstoffproben bereitgestellt werden können, deren Eigenschaften denen konventionell hergestellter Proben entsprechen.

Aus dem Vergleich zwischen konventionell und pulverbasiert gefertigten Proben werden zudem Regeln abgeleitet, die es erlauben, ausgehend von einem gewünschten Probenzustand auf die zu verwendende Pulvergrößenverteilung in Verbindung mit dem Parametersatz für die additive Fertigung und thermomechanische Behandlung zu schließen. Dazu wird über die Pulvereigenschaften (Korngrößenverteilung, die chemische Zusammensetzung), die Prozessbedingungen beim SLM- bzw. Sinter-Prozess und über eine nachfolgende thermomechanische Behandlung ein Gefüge eingestellt, dessen Umformeigenschaften denen eines konventionell umgeschmiedeten Gussgefüges entsprechen würde.

Eine noch weitere Ausführungsform des Verfahrens sieht vor, bei Werkstoffproben die per SLM hergestellt wurden und die auf Grund von Porosität (Defekten) bei der Umformung versagen, diese Proben durch heißisostatisches Pressen zu verdichten.

Weiter wird vorgeschlagen, für bestimmte Werkstoffgruppen, die der Probenherstellung durch SLM nicht zugänglich sind, alternative Fertigungsprozesse wie z. B. das Laserauftragsschweißen heranzuziehen und/oder den SLM Prozess bei höheren Temperaturen, etwa mittels beheizter Bauplattform durchzuführen.

Weitere im Bedarfsfall einsetzbare Verfahren der Herstellung von Proben aus Pulvern, unter denen vorliegend die additive Fertigung verstanden wird, umfassen die additive Fertigung mittels Elektronenstrahl, die additive Fertigung von Pulver-Binder-Gemischen mit anschließendem Sintern, das Verpressen und Sintern von Proben, das Metal-Injection Moulding, das formgebende Fügen durch Auftragschweißen mit Plasma bzw. Lichtbogen und Pulver bzw. Fülldraht und das thermische Spritzen.

Die Lösung des erfindungsgemäßen Verfahrens basiert darauf, dass über Pulververdüsung und additive Fertigung Werkstoffproben im Labormaßstab mit ähnlichen Mikrostruktur-Merkmalen und Eigenschaften wie konventionell gefertigte Proben hergestellt werden können, was den Rückschluss auf die Eigenschaften eines auf konventionellem Weg hergestellten Werkstoffs zulässt. Die Erfindung nutzt die Vorteile additiv gefertigter Werkstoffe in Bezug auf bspw. Homogenität und Feinkörnigkeit aus.

Beispielhaft kann für die Schaffung einer härtbaren Stahlgruppe so vorgegangen werden, dass etwa von zwei ähnlichen Stahlzusammensetzungen ausgehend von der Pulverherstellung über die additive Fertigung die chemische Zusammensetzung und die Mikrostruktur- und Eigenschaftsentwicklung bei thermomechanischer Behandlung umfassend charakterisiert und damit Parameter für die PM-AM-Datenbanken generiert werden. Ein umfassender Vergleich zwischen den Schmiede- und Produkteigenschaften konventionell hergestellter Varianten der zu untersuchenden Stähle erfolgt.

Da, wie dargelegt, entlang der Prozesskette Legierungselemente bspw. verdampfen oder mit Fertigungsgefäßen reagieren können, was die chemische Zusammensetzung der Schmelze bzw. des Pulvers und somit auch der hergestellten Proben ändert, wird der Einfluss jedes Prozessschrittes untersucht und ermittelt, indem die chemische Zusammensetzung analysiert wird (siehe Abbildung 3). Hierauf wird in Bezug auf die schwankenden Legierungsparameters so lange iteriert werden, bis das optimale Ausgangslegierungspulvergemisch "Werkstoff" ermittelt wurde.

Mithilfe der erfindungsgemäßen Datenbank und der Modelle kann dann eine Vorhersage getroffen werden, welches Legierungselement in welcher Menge bspw. dem Pulververdüsungsprozess vor Genese eines Pulvers zugeführt werden muss, um nach der Pulverherstellung und der weiteren Durchführung des additiven Prozesses, gleich welcher Art, und samt möglicher thermomechanischer Behandlung die gewünschte chemische Zusammensetzung, also den "Zielwerkstoff" zu erhalten.

Die anliegenden Abbildungen zeigen Aspekte des erfindungsgemäßen Verfahrens im Vergleich mit konventionellem gussbasierten Verfahren.

Dabei zeigen:
- **Abb. 1**: Ein Schema einer Verarbeitungsstufe vom Halbzeug zum Produkt.
- **Abb. 2**: Ein Schema eines Vergleichs einer konventionellen Route der Werkstoffentwicklung im Labormaßstab (oben) und einer Entwicklung über Pulverherstellung und SLM (unten).
- **Abb. 3**: Ein Schema zum Vorgehen zur Bestimmung der prozessbedingten Verluste an Legierungselementen.

## Patentansprüche

1. Verfahren zur Entwicklung von Schmiedewerkstoffen
**umfassend die Schritte:**
a) Vorbestimmen einer Ziel-Zusammensetzung einer additiv zu fertigenden Werkstoffprobe eines Ziel-Schmiedewerkstoffes,
b) Bereitstellen eines Metallpulvers mit einer Ausgangszusammensetzung, die sich von der Ziel-Zusammensetzung um einen Kompensationsanteil zumindest eines Legierungsbestandteils unterscheidet, der durch einen Verlustanteil des zumindest einen Legierungsbestandteils beim additiven Fertigen vorbestimmt ist, zur additiven Fertigung der Werkstoffprobe mit der Ziel-Zusammensetzung aus a),
c) Erhalten eines ersten Gefügezustandes aus der additiven Fertigung,
d) durch thermomechanische Behandlung der additiv gefertigten Werkstoffprobe Generieren einer Mikrostruktur ausgehend vom Herstellen des Ausgangsmaterials für das Schmieden durch Gießen, die einer Mikrostruktur einer aus demselben Werkstoff geschmiedeten Werkstoffprobe entspricht, und
e) Ausführen von Untersuchungen über die Verarbeitungs- und Endeigenschaften der Werkstoffprobe, hieraus Rückschließen auf die Eignung der ersten chemischen Zusammensetzung als Ziel-Schmiedewerkstoff.

2. Verfahren nach Anspruch 1, wobei das Bereitstellen des Metallpulvers in Schritt b)die Herstellung des Metallpulvers aus einem Ausgangsmaterial mit der Ausgangszusammensetzung durch Verdüsung umfasst und das Vorbestimmen von Verlustanteilen der Legierungsbestandteile beim additiven Fertigen mittels einer Datenbank erfolgt, in der die beim additiven Fertigen auftretenden Verlustanteile einzelner, unterschiedlicher Legierungsbestandteile aufgelistet sind, die anhand von Referenz-Ausgangsmaterialien, die die unterschiedlichen Legierungsbestandteile aufweisen, durch Analysen der Zusammensetzungen vor und nach den bei der additiven Fertigung durchzuführenden Schritten erhalten werden, die zumindest das Verdüsen des Ausgangsmaterials zur Pulverherstellung umfassen, und wobei zur Bereitstellung des Metallpulvers der Kompensationsanteil vor oder nach der Herstellung des Metallpulvers zugegeben wird.

3. Verfahren nach Anspruch 1 oder 2,
**umfassend den Schritt**
f) Übertragen der Eigenschaften der additiv gefertigten Schmiedewerkstoffprobe auf das Verarbeiten dieses Schmiedewerkstoffes mittels konventionellem Gussverfahren.

4. Verfahren nach zumindest einem der Ansprüche 1 bis 3,
**umfassend den Schritt**
g) Nachweis der Wirkung der Zugabe vorbestimmter Legierungselemente auf die Schmiedewerkstoffprobe, wobei der Nachweis der Wirkung vorbestimmter Legierungselemente auf die Umformbarkeit der Schmiedewerkstoffprobe oder auf die Beeinflussung des Umwandlungsverhaltens bei der Wärmebehandlung umfasst ist.

5. Verfahren nach zumindest einem der Ansprüche 1 bis 4,
**umfassend den Schritt**
h) Modellerstellung für die Schmiedewerkstoffpulverherstellung, den SLM-Prozess und/oder das Umform- und Umwandlungsverhalten, dabei zu Grunde legen physikalischer Annahmen und Größen wie Aktivierungsenergien für die Warmumformung und auftretenden Phasenumwandlungen.

6. Verfahren nach Anspruch 5,
**umfassend den Schritt**
Anpassen der Modelle sowohl an die additiv hergestellten Proben als auch an die Referenzproben unter Abbildung der Werkstoffmerkmale, dabei Ableiten von Übertragungsregeln zum Rückschluss vom additiv hergestellten Zustand auf den konventionellen Zustand.

## Claims

1. A method for developing forging materials
**comprising the steps of:**
a) predetermining a target composition of a material sample of a target forging material, which is to be additively manufactured,
b) providing a metal powder with an initial composition, which differs from the target composition by a compensation component of at least one alloying constituent, which is predetermined by a loss component of the at least one alloying constituent during the additive manufacturing, for the additive manufacturing of the material sample with the target composition from a),
c) obtaining a first structural state from the additive manufacturing,
d) starting with the production of the starting material for the forging by casting, using thermomechanical treatment of the additively manufactured material sample to generate a microstructure, which corresponds to a microstructure of a material sample forged from the same material, and
e) performing tests relating to the processing and final properties of the material sample, drawing conclusions therefrom to the suitability of the first chemical composition as target forging material.

2. The method according to claim 1, wherein the providing of the metal powder in step b) comprises the production of the metal powder from a starting material with the starting composition by means of atomization, and the predetermining of loss components of the alloying constituents during the additive manufacturing takes place by means of a database, in which the loss components occurring during the additive manufacturing of individual, different alloying components are listed, which are obtained, based on reference starting materials, which have different alloying components, by analyzing the compositions before and after the steps, which are to be performed during the additive manufacturing and which comprise at least the atomizing of the starting material for the powder production, and wherein to provide the metal powder, the compensation component is added before or after the production of the metal powder.

3. The method according to claim 1 or 2,
**comprising the step of**
f) transferring the properties of the additively manufactured forging material sample to the processing of this forging material by means of conventional casting process.

4. The method according to at least any one of claims 1 to 3,
**comprising the step of**
g) proving the effect of the adding of predetermined alloying elements on the forging material sample, wherein this includes the proof of the effect of predetermined alloying elements on the formability of the forging material sample or on the impact of the transformation behavior during the heat treatment.

5. The method according to at least any one of claims 1 to 4,
**comprising the step of**
h) creating a model for the forging material powder production, the SLM process and/or the forming and transformation behavior, thereby using physical assumptions and variables, such as activation energies for the heat forming and occurring phase transformations, as basis.

6. The method according to claim 5,
**comprising the step of**
adapting the models to the additively manufactured samples as well as to the reference samples by mapping the material features, thereby deducing transfer rules for drawing conclusions from the additively produced state to the conventional state.

## Revendications

1. Procédé pour le développement de matériaux de forge
**comprenant les étapes :**
a) prédétermination d'une composition cible d'un échantillon d'un matériau de forge cible, à fabriquer additivement,
b) mise à disposition d'une poudre métallique avec une composition initiale qui est différente de la composition cible quant à une part de compensation au moins d'un composant d'alliage, laquelle est prédéfinie par un taux de perte au moins d'un composant d'alliage pendant la fabrication additive, pour la fabrication additive de l'échantillon de matériau avec la composition cible prédéterminée dans l'étape a),
c) obtention d'un premier état structural issu de la fabrication additive,
d) par le traitement thermomécanique de l'échantillon de matériau fabriqué additivement, génération d'une microstructure en partant de la fabrication du matériau initial pour la forge par moulage, correspondant à une microstructure d'un échantillon de matériau forgé à partir du même matériau, et
e) réalisation d'analyses sur les caractéristiques de mise en œuvre et les propriétés finales de l'échantillon de matériau, permettant de déduire l'aptitude de la première composition chimique comme matériau de forge cible.

2. Procédé conformément à la revendication 1, la mise à disposition de la poudre métallique dans l'étape b) comprenant la fabrication de la poudre métallique à partir d'un matériau initial avec la composition initiale par atomisation et la prédétermination de taux de perte des composants d'alliage pendant la fabrication additive étant réalisée au moyen d'une base de données dans laquelle les taux de perte de différents composants d'alliage, survenant pendant la fabrication additive, sont énumérés, lesquels sont obtenus sur la base de matériaux initiaux de référence présentant les différents composants d'alliage, par des analyses des compositions réalisées avant et après les étapes à exécuter pendant la fabrication additive, lesquelles comprennent au moins l'atomisation du matériau initial pour la fabrication de la poudre, et pour la mise à disposition de la poudre métallique, la part de compensation étant ajoutée avant ou après la fabrication de la poudre métallique.

3. Procédé conformément à la revendication 1 ou 2,
**comprenant l'étape**
f) transfert des caractéristiques de l'échantillon de matériau de forge fabriqué additivement à la mise en œuvre de ce matériau de forge par procédé de moulage conventionnel.

4. Procédé conformément au moins à l'une des revendications 1 à 3,
**comprenant l'étape**
g) détection de l'action de l'ajout d'éléments d'alliage prédéterminés sur l'échantillon de matériau de forge, la détection de l'action d'éléments d'alliage prédéterminés sur la formabilité de l'échantillon de matériau de forge ou sur l'influence du comportement à la transformation pendant le traitement thermique étant incluse.

5. Procédé conformément au moins à l'une des revendications 1 à 4,
**comprenant l'étape**
h) élaboration de modèles pour la fabrication de poudre de matériau de forge, le procédé SLM et/ou le comportement au formage et à la transformation, sur la base d'estimations et de grandeurs physiques de référence, comme les énergies d'activation pour le formage à chaud et les transformations de phases qui se produisent.

6. Procédé conformément à la revendication 5,
**comprenant l'étape**
adaptation des modèles aux échantillons fabriqués additivement comme aux échantillons de référence avec représentation des caractéristiques de matériau, permettant la déduction de règles de transfert pour la déduction de l'état conventionnel à partir de l'état fabriqué additivement.
